# EUROPÄISCHE PATENTSCHRIFT

(11) **EP 3 365 963 B1**
(45) Veröffentlichungstag und Bekanntmachung des Hinweises auf die Patenterteilung: **24.08.2022**
(21) Anmeldenummer: 16781292.4
(22) Anmeldetag: 11.10.2016
(51) Int. Cl.: H02M 1/12, H02M 5/293

(54) **ANLAGE, AUFWEISEND EIN NETZ, EIN FILTER UND MEHRERE ANTRIEBE**
SYSTEM, COMPRISING A NETWORK, A FILTER, AND MORE THAN ONE DRIVE
INSTALLATION, COMPORTANT UN RÉSEAU, UN FILTRE ET PLUSIEURS DISPOSITIFS D'ENTRAÎNEMENT

(30) Priorität: 23.10.2015 DE 102015013671
(43) Veröffentlichungstag der Anmeldung: 29.08.2018
(73) Patentinhaber: SEW-Eurodrive GmbH & Co, 76646 Bruchsal (DE)
(72) Erfinder: SCHMIDT, Josef, 76676 Graben-Neudorf (DE); ZÖLLER, Thomas, 76646 Bruchsal (DE); BACKES, Manfred, 74199 Untergruppenbach (DE); HAUCK, Matthias, 68723 Schwetzingen (DE)
(86) Internationale Anmeldenummer: PCT/EP2016/025109
(87) Internationale Veröffentlichungsnummer: WO 2017/067669

(56) Entgegenhaltungen:
- EP-A1- 2 858 228
- WO-A1-2014/140414

## Beschreibung

Die Erfindung betrifft eine Anlage, aufweisend ein Netz, insbesondere also elektrisches Versorgungsnetz, einen Filter und einen oder mehrere Antriebe.

Es ist allgemein bekannt, dass ein Filter zum Unterdrücken von störenden Stromanteilen bei elektrischen Anlagen verwendet wird.

**Aus der** WO 2014/140414 A1 **ist als nächstliegender Stand der Technik ein Umrichter bekannt, der eingangsseitig aus einem LCL-Filter-Modul versorgt wird, das über ein Filter aus dem elektrischen Versorgungsnetz gespeist wird.**

**Aus der** EP 2 858 228 A1 **ist ein Umrichter mit Eingangsfilter bekannt.**

Der Erfindung liegt daher die Aufgabe zugrunde, eine Anlage in möglichst kompakter Weise weiterzubilden.

Erfindungsgemäß wird die Aufgabe bei der Anlage nach den in Anspruch 1 angegebenen Merkmalen gelöst. Weitere Ausführungsformen sind in den abhängigen Ansprüchen definiert.

Wichtige Merkmale der Erfindung bei der Anlage sind, dass sie ein Netz, insbesondere also elektrisches Versorgungsnetz, einen Filter und einen oder mehrere Antriebe aufweist,
wobei das Filter einerseits, insbesondere eingangsseitig, mit dem Netz und andererseits, insbesondere ausgangsseitig, zumindest eine elektrische Leitung mit den Antrieben verbunden ist,
wobei jeder Antrieb eine mit der elektrischen Leitung verbundene Zusatzkapazitätsanordnung aufweist, welche am Wechselspannungsanschluss eines Wechselrichters angeordnet ist, dessen Gleichspannungs-Anschluss mit dem Gleichspannungsanschluss eines motorseitigen Wechselrichters verbunden ist, dessen Wechselspannungsausgang einen Elektromotor speist,
insbesondere so, dass die zwischen der Zusatzkapazitätsanordnung und dem Motor angeordneten beiden Wechselrichter als Direktumrichter fungieren.

Von Vorteil ist dabei, dass das Filter zusammen mit der Zusatzkapazitätsanordnung störende Stromanteile unterdrückt. Dabei ist die Zusatzkapazitätsanordnung nahe am Direktumrichter, bestehend aus dem motorseitigen und dem netzseitigen Wechselrichter, anordenbar.

Bei einer vorteilhaften Ausgestaltung weist das Filter in jeder der Netzphasen jeweils eine Filterinduktivität L_{N} auf,
wobei zwischen jeweils zwei der Netzphasen jeweils eine Filterkapazität C_{F} angeordnet ist. Von Vorteil ist dabei, dass ein Tiefpass mit der Filterkapazität C_{F} gebildet ist, so dass pulsfrequente Leistungsanteile des Wechselrichters gedämpft werden.

Bei einer vorteilhaften Ausgestaltung das Filter in jeder der Netzphasen jeweils eine Filterinduktivität L_{N} aufweist, wobei zwischen einem Sternpunkt und jeder der Netzphasen jeweils eine Filterkapazität C_{F} angeordnet ist. Von Vorteil ist dabei, dass statt der vorgenannten Dreieckschaltung eine Sternschaltung mit entsprechenden Spannungswerten ausführbar ist.

**Erfindungsgemäß** sind die Zusatzkapazitätsanordnungen filterseitig parallelgeschaltet, insbesondere also alle Zusatzkapazitätsanordnungen gemeinsam aus dem oder einem Filter gespeist sind. Von Vorteil ist dabei, dass ein einziges Filter zur Versorgung der Antriebe genügt, da die Wechselspannungsanschlüsse der netzseitigen Wechselrichter elektrisch parallelgeschaltet sind und somit diese Parallelschaltung aus dem Filter direkt versorgbar ist beziehungsweise die rückzuspeisende Leistung aus dieser Parallelschaltung über das Filter ins Netz rückzuspeisen ist.

Bei einer vorteilhaften Ausgestaltung weist die Zusatzkapazitätsanordnung zwischen jeweils zwei der Netzphasen jeweils eine Zusatzkapazität Cs auf. Von Vorteil ist dabei, dass Schaltüberspannungen begrenzt werden, insbesondere diejenigen, welche aufgrund parasitärer Induktivitäten erzeugt werden.

Bei einer alternativen vorteilhaften Ausgestaltung weist die Zusatzkapazitätsanordnung zwischen einem Sternpunkt und jeder der Netzphasen jeweils eine Zusatzkapazität Cs auf. Von Vorteil ist dabei, dass statt der vorgenannten Dreieckschaltung eine Sternschaltung mit entsprechenden Spannungswerten ausführbar ist.

Bei einer vorteilhaften Ausgestaltung ist die Zusatzkapazität Cs zwischen dreimal und neunmal kleiner als die Filterkapazität C_{F}. Von Vorteil ist dabei, dass die Schaltüberspannungen nahe am Wechselrichter abdämpfbar sind. Somit ist nur ein Filter für alle Antriebe ausreichend. Denn das Filter dämpft die pulsfrequenten Leistungsanteile, insbesondere also Stromanteile, ab.

Bei einer vorteilhaften Ausgestaltung ist in jeder Netzphase die Leitungsinduktivität zwischen Zusatzkapazitätsanordnung und jeweils elektrisch verbundenem Halbleiterschalter des netzseitigen Wechselrichters kleiner als die Leitungsinduktivität zwischen Zusatzkapazitätsanordnung und Filter. Von Vorteil ist dabei, dass eine große Entfernung mittels der Leitung überbrückbar ist. Somit ist die Zusatzkapazitätsanordnung integrierbar in den Motor, also in einem gemeinsamen Gehäuse mit dem Stator des Motors anordenbar, wobei der Anschlusskasten zum Motorgehäuse gehört.

Bei einer vorteilhaften Ausgestaltung treibt einer der Antriebe eine Schwungmasse an, insbesondere so dass dieser Antrieb als Schwungmassenspeicher ausgebildet ist. Von Vorteil ist dabei, dass weniger Leistung ins Netz zurückzuspeisen ist, sondern mehr Leistung zwischen den Antrieben austauschbar ist.

Bei einer vorteilhaften Ausgestaltung ist die Entfernung der Zusatzkapazitäten Cs zum Umrichter, insbesondere zu den Halbleiterschaltern des netzseitigen Wechselrichters des Umrichters, kleiner als die Entfernung zu den Filterkapazitäten C_{F} und/oder zu den Filterinduktivitäten L_{F}. Von Vorteil ist dabei, dass das Filter weit entfernt von dem Umrichter anordenbar ist.

Bei einer vorteilhaften Ausgestaltung sind auf der vom Netz abgewandten Ausgangsseite des Filters Sicherungen vorgesehen,
insbesondere wobei jeder der ausgangsseitigen Phasen jeweils zumindest eine Sicherung zugeordnet ist, insbesondere wobei in jeder der ausgangsseitigen Phasen jeweils zumindest eine Sicherung angeordnet ist. Von Vorteil ist dabei, dass Sicherungen am Umrichter vorsehbar sind und ebenso am Filter. Jeweils sind die Sicherungen integrierbar ins Filter oder ins Motorgehäuse.

Bei einer vorteilhaften Ausgestaltung ist eingangsseitig, also auf der dem Filter zugewandten Seite der jeweiligen Zusatzfilteranordnung des jeweiligen Umrichters, in jeder Netzphase jeweils zumindest eine Sicherung angeordnet. Von Vorteil ist dabei, dass die Sicherheit erhöht ist und die Sicherungen sowohl nahe am Filter, insbesondere integriert im Gehäuse des Filters, als auch nahe am Motor, insbesondere integriert im Gehäuse des Motors, angeordnet sind.

Die Erfindung wird nun anhand von Abbildungen näher erläutert:
In der Figur 1 ist ein erster erfindungsgemäßer Antrieb gezeigt-
In der Figur 2 ist ein System mit erfindungsgemäßen Antrieben gezeigt-
In der Figur 3 ist ein weiteres System mit erfindungsgemäßen Antrieb gezeigt.

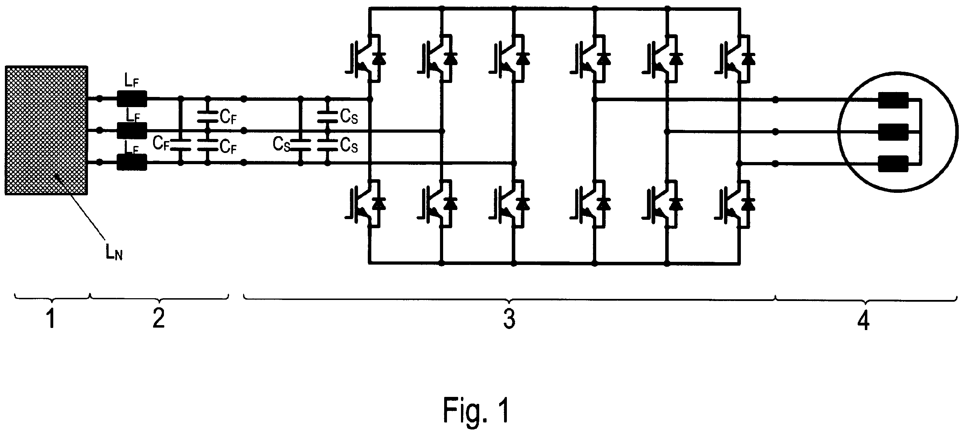

Wie in Figur 1 gezeigt, weist der Antrieb einen Elektromotor 4 auf der aus einem Umrichter 3 gespeist wird, welcher aus einem Netz 1, insbesondere Drehstromversorgungsnetz, versorgt ist oder in dieses Netz rückspeist.

Hierbei ist der Umrichter 3 als Direktumrichter ausgeführt, welcher motorseitig einen Wechselrichter und netzseitig ebenfalls einen Wechselrichter aufweist, insbesondere wobei letzterer als rückspeisefähiger Gleichrichter ausgeführt ist. Die ausgangsseitigen Anschlüsse des motorseitigen Wechselrichters sind mit den Anschlüssen des Motors 4, insbesondere mit den Anschlüssen der Statorwicklung des Motors 4, elektrisch verbunden, die eingangsseitigen Anschlüsse des motorseitigen Wechselrichters sind mit einem netzseitigen Wechselrichter direkt verbunden, insbesondere an dessen Gleichspannungsanschluss.

Somit ist die bei generatorischem Betrieb vom Motor 4 erzeugte elektrische Leistung vom motorseitigen Wechselrichter an den ebenfalls angeschlossenen netzseitigen Wechselrichter abführbar. Dieser netzseitige Wechselrichter ist mit seinem vom motorseitigen Wechselrichter abgewandten Anschlüssen über ein Filter 2 mit dem Netz 1 verbunden.

Bei motorischem Betrieb des Motors 4 arbeitet der netzseitige Wechselrichter als Gleichrichter. Denn jedem seiner Leistungsschalter ist jeweils eine Diode, insbesondere als Freilaufdiode, parallel zugeschaltet. Diese Dioden bilden dann also einen Drehstrombrückengleichrichter.

Aus dem von diesem als Gleichrichter im motorischen Betrieb des Motors 4 arbeitenden Wechselrichter wird die elektrische Leistung direkt dem motorseitigen Wechselrichter zugeführt, der den Motor mit einer Drehspannung versorgt, deren Frequenz von einer die Wechselrichter ansteuernden Signalelektronik bestimmt ist. Die Signalelektronik steuert die in Halbbrücken zusammengeschalteten Halbleiterschalter der Wechselrichter mit pulsweitenmodulierten Steuersignalen an.

Das zwischen dem netzseitigen Wechselrichter und dem Netz 1 angeordnete Filter 2 weist drei Filterinduktivitäten L_{F} auf, wobei jede der drei Netzphasen durch jeweils eine der Filterinduktivitäten L_{F} geführt ist. Jede der drei Filterinduktivitäten L_{F} ist gleich groß, insbesondere wenn keine fertigungsbedingten Toleranzen berücksichtigt werden.

Zwischen einer ersten der Netzphasen und einer zweiten der Netzphasen ist eine erste Filterkapazität C_{F} und eine erste Zusatzkapazität Cs angeordnet, so dass diese beiden Kapazitäten unter Vernachlässigung der Leitungsinduktivitäten parallelgeschaltet wären.

Zwischen einer zweiten der Netzphasen und einer dritten der Netzphasen ist eine zweite Filterkapazität C_{F} und eine zweite Zusatzkapazität Cs angeordnet, so dass diese beiden Kapazitäten unter Vernachlässigung der Leitungsinduktivitäten parallelgeschaltet wären.

Zwischen der ersten der Netzphasen und der dritten der Netzphasen ist eine dritte Filterkapazität C_{F} und eine dritte Zusatzkapazität Cs angeordnet, so dass diese beiden Kapazitäten unter Vernachlässigung der Leitungsinduktivitäten parallelgeschaltet wären.

Somit ist also sowohl eine Dreieckschaltung mit der Filterkapazität C_{F} als auch eine Dreieckschaltung mit der Zusatzkapazität Cs vorgesehen.

Die erste, zweite und dritte Filterkapazität C_{F} sind jeweils gleich groß bemessen, insbesondere wenn keine fertigungsbedingten Toleranzen berücksichtigt werden.

Die erste, zweite und dritte Zusatzkapazität Cs sind jeweils gleich groß bemessen, insbesondere wenn keine fertigungsbedingten Toleranzen berücksichtigt werden.

Die Summe der beiden Kapazitätswerte C_{F} und C_{S} ist derart bemessen, dass der aus dieser Kapazität sowie der Netzinduktivität L_{N} und der Filterinduktivität L_{F} gebildete Tiefpass pulsfrequente Leistungsanteile des Umrichters, insbesondere des motorseitigen Wechselrichters, sowie Spannungseinbrüche aufgrund der Kommutierung des netzseitigen Wechselrichters hinreichend gedämpft und somit vom Netz 1 und anderen, mit dem Netz 1 verbundenen Verbrauchern im Wesentlichen ferngehalten werden.

Außerdem werden durch die Zusatzkapazitäten Cs Schaltüberspannungen, die aufgrund parasitärer Induktivitäten entstehen, begrenzt und somit die Halbleiterschalter geschützt und eine sichere Funktion auf diese Weise gewährleistet. Diese Zusatzkapazitäten Cs werden derart angeordnet, dass sie sich möglichst nahe am Umrichter befinden. Somit sind sie möglichst niederinduktiv angebunden. Die Entfernung der Zusatzkapazitäten Cs zum Umrichter, insbesondere zu den Halbleiterschaltern des netzseitigen Wechselrichters des Umrichters, ist kleiner als die Entfernung zu den Filterkapazitäten C_{F} und/oder zu den Filterinduktivitäten L_{F}. Somit ist auch in jeder der Netzphasen die Leitungsinduktivität zwischen den Zusatzkapazitäten Cs und den Halbleiterschaltern des netzseitigen Wechselrichters kleiner, insbesondere mindestens zehnmal kleiner, als die Leitungsinduktivität zwischen den Zusatzkapazitäten C_{S} und den Filterkapazitäten C_{F}.

Der jeweilige Betrag einer jeweiligen Zusatzkapazität Cs ist zwischen dreimal und neunmal kleiner als der jeweilige Betrag einer jeweiligen Filterkapazität C_{F}.

Im Folgenden wird die Anordnung der drei Zusatzkapazitäten Cs an den drei Netzphasen als Zusatzkapazitätsanordnung bezeichnet.

Die Anordnung der drei Filterinduktivitäten L_{N} in den drei Netzphasen zusammen mit den zwischen den Netzphasen angeordneten Filterkapazitäten C_{F} wird im Folgenden als Filter 2 bezeichnet.

Das aus Filter 2 und Zusatzkapazitätsanordnung gebildete Gesamtfilter ist somit ein passives Filter.

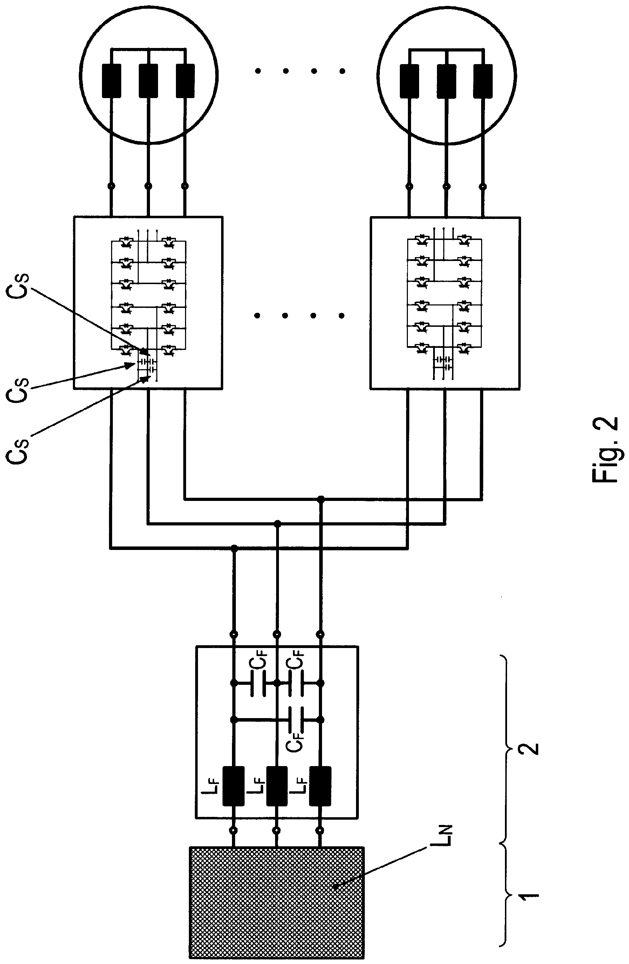

Wie in Figur 2 gezeigt, sind mehrere Umrichter über ein einziges Filter 2 mit dem Netz 1 verbunden oder aus dem Netz 1 versorgbar.

Jedem Umrichter ist jeweils eine Zusatzkapazitätsanordnung vorgeschaltet. Vorzugsweise wird die Zusatzkapazitätsanordnung hierbei baulich verbunden, insbesondere im Gehäuse des jeweiligen Umrichters angeordnet und/oder integriert.

Über diese Zusatzkapazitätsanordnungen sind die Umrichter somit parallel aus dem Filter 2 gespeist. Somit ist nur ein einziges Filter 2 für mehrere Umrichter notwendig.

Dabei ist einer der Motoren auch als Schwungmassenantrieb ausführbar.

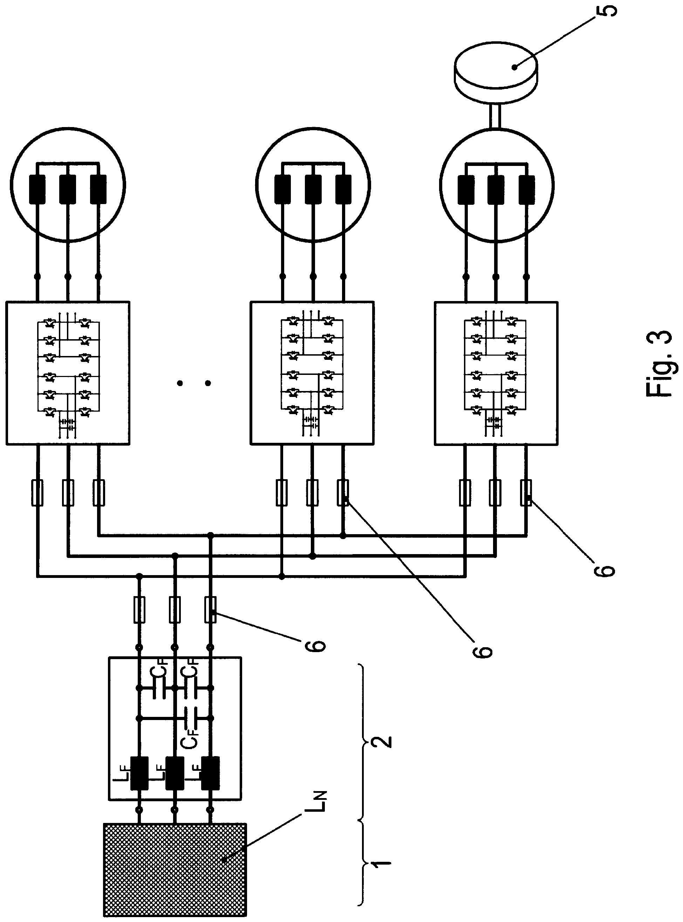

Dies ist in Figur 3 näher dargestellt. Dabei ist einer der Antriebe, insbesondere der Motor dieses Antriebs, mit einer Schwungmasse ausgeführt. Da die Umrichter über die Zusatzkapazitätsanordnungen parallelgeschaltet sind, ist auch Energie zwischen dem als Schwungmassenspeicher ausgeführten Antrieb und den anderen Antrieben, insbesondere Umrichtern, austauschbar. Wenn also die Motoren der anderen Antriebe motorisch betrieben werden, wird dem Schwungmassenspeicher Energie entnommen und den anderen Umrichtern zugeführt. Wird jedoch von den Motoren der anderen Antriebe mehr Leistung generatorisch erzeugt als motorisch verbraucht, ist dieser Überschuss an elektrischer Leistung dem Schwungmassenspeicher zuführbar, solange dieser noch nicht vollgeladen ist, also seine Ladekapazitätsgrenze noch nicht erreicht hat.

Vorteil ist hiermit, dass der Leitungsquerschnitt der aus dem Netz 1 versorgenden Leitungen gering haltbar ist und außerdem das Filter 2 nur für geringe Stromwerte ausgelegt sein muss.

Auf der vom Netz 1 abgewandten Ausgangsseite des Filters 2 sind Sicherungen 6 vorsehbar. Dabei ist jeder der Ausgangsphasen jeweils zumindest eine Sicherung 6 zuordenbar. Zusätzlich sind Schalter vorsehbar.

Auch eingangsseitig, also auf der dem Filter 2 zugewandten Seite der jeweiligen Zusatzfilteranordnung des jeweiligen Umrichters sind in jeder Netzphase jeweils zumindest eine Sicherung 6 angeordnet. Zusätzlich sind Schalter vorsehbar.

In den Ausführungsbeispielen nach Figur 1 bis 3 ist jeweils der Umrichter mit dem Motor 4 als bauliche Einheit ausführbar, also der Umrichter innerhalb des Gehäuses des Motors 4 anordenbar. Dabei umfasst das Gehäuse des Motors 4 auch den Anschlusskasten des Motors, so dass der Umrichter 3 auch innerhalb des Anschlusskastens anordenbar ist. Somit ist dann das Filter 2 über elektrische Leitungen verbunden mit dem im Gehäuse des Motors angeordneten Umrichter 3.

In den Ausführungsbeispielen nach Figur 1 bis 3 ist jeder Antrieb als Direktantrieb ausgeführt, weist also einen netzseitigen, insbesondere mit der Zusatzkapazitätsanordnung verbundenen Wechselrichter aufweist, einen Elektromotor und einen motorseitigen Wechselrichter auf,
wobei der Gleichspannungsanschluss des netzseitigen Wechselrichters direkt mit dem Gleichspannungsanschluss des motorseitigen Wechselrichters verbunden ist,
wobei der Motor am Wechselspannungsanschluss des motorseitigen Wechselrichters angeschlossen ist,
wobei die Zusatzkapazitätsanordnung am Wechselspannungsanschluss des netzseitigen Wechselrichters angeschlossen ist.

Statt der genannten Dreieckschaltungen wäre bei weiteren erfindungsgemäßen Ausführungsbeispielen jeweils auch eine Sternschaltung ausführbar, wobei der Aufwand zum Herstellen für die zugehörigen Verbindungen hierbei größer sein kann, weil ein jeweiliger Sternpunkt vorzusehen ist.

### Bezugszeichenliste

1 Netz, insbesondere Drehstromversorgungsnetz
2 Filter
3 Direktumrichter, umfassend rückspeisefähiger Gleichrichter, also netzseitigen Wechselrichter, und motorseitigen Wechselrichter
4 Elektromotor
5 Schwungmasse
6 Sicherung

L_{N} Netzinduktivität
L_{F} Filterinduktivität
C_{F} Filterkapazität
C_{S} Zusatzkapazität

## Patentansprüche

1. Anlage, aufweisend ein Netz (1), insbesondere also elektrisches Versorgungsnetz, ein, insbesondere einziges, Filter (2) und mehrere Antriebe,
wobei das Filter (2) einerseits, insbesondere eingangsseitig, mit dem Netz (1) und andererseits, insbesondere ausgangsseitig, zumindest mittels einer elektrischen Leitung mit den Antrieben verbunden ist,
wobei jeder Antrieb eine mit der elektrischen Leitung verbundene Zusatzkapazitätsanordnung aufweist, welche am Wechselspannungsanschluss eines Wechselrichters angeordnet ist, dessen Gleichspannungs-Anschluss mit dem Gleichspannungsanschluss eines motorseitigen Wechselrichters verbunden ist, dessen Wechselspannungsausgang einen Elektromotor (4) speist,
so, dass die zwischen der **jeweiligen** Zusatzkapazitätsanordnung und dem **jeweiligen** Motor angeordneten beiden **jeweiligen** Wechselrichter als **jeweiliger** Direktumrichter (3) fungieren,
**wobei die jeweiligen Zusatzkapazitätsanordnungen filterseitig parallelgeschaltet sind.**

2. Anlage nach Anspruch 1,
**dadurch gekennzeichnet, dass**
das Filter (2) in jeder der Netzphasen jeweils eine Filterinduktivität **L_{F}** aufweist,
wobei zwischen jeweils zwei der Netzphasen jeweils eine Filterkapazität C_{F} angeordnet ist.

3. Anlage nach Anspruch 1,
**dadurch gekennzeichnet, dass**
das Filter (2) in jeder der Netzphasen jeweils eine Filterinduktivität **L_{F}** aufweist,
wobei zwischen einem Sternpunkt und jeder der Netzphasen jeweils eine Filterkapazität C_{F} angeordnet ist.

4. Anlage nach mindestens einem der vorangegangenen Ansprüche,
**dadurch gekennzeichnet, dass**
**alle jeweiligen Zusatzkapazitätsanordnungen gemeinsam aus dem Filter (2) gespeist sind.**

5. Anlage nach mindestens einem der vorangegangenen Ansprüche,
**dadurch gekennzeichnet, dass**
- die Zusatzkapazitätsanordnung zwischen jeweils zwei der Netzphasen jeweils eine Zusatzkapazität Cs aufweist
oder dass
- die Zusatzkapazitätsanordnung zwischen einem Sternpunkt und jeder der Netzphasen jeweils eine Zusatzkapazität Cs aufweist.

6. Anlage nach **Anspruch 5,**
**dadurch gekennzeichnet, dass**
**die** Zusatzkapazität C_{S} zwischen dreimal und neunmal kleiner als die Filterkapazität C_{F} ist.

7. Anlage nach mindestens einem der vorangegangenen Ansprüche,
**dadurch gekennzeichnet, dass**
in jeder Netzphase die Leitungsinduktivität zwischen Zusatzkapazitätsanordnung und jeweils elektrisch verbundenem Halbleiterschalter des netzseitigen Wechselrichters kleiner ist als die Leitungsinduktivität zwischen Zusatzkapazitätsanordnung und Filter (2).

8. Anlage nach mindestens einem der vorangegangenen Ansprüche,
**dadurch gekennzeichnet, dass**
mindestens einer der Antriebe eine Schwungmasse (5) antreibt, insbesondere so dass dieser Antrieb als Schwungmassenspeicher ausgebildet ist.

9. Anlage **nach einem der Ansprüche 5 bis 8,**
**dadurch gekennzeichnet, dass**
die Entfernung der Zusatzkapazitäten Cs zum Umrichter, insbesondere zu den Halbleiterschaltern des netzseitigen Wechselrichters des Umrichters, kleiner ist als die Entfernung zu den Filterkapazitäten C_{F} und/oder zu den Filterinduktivitäten L_{F}.

10. Anlage nach mindestens einem der vorangegangenen Ansprüche,
**dadurch gekennzeichnet, dass**
auf der vom Netz (1) abgewandten Ausgangsseite des Filters (2) Sicherungen vorgesehen sind,
insbesondere wobei jeder der ausgangsseitigen Phasen jeweils zumindest eine Sicherung (6) zugeordnet ist, insbesondere wobei in jeder der ausgangsseitigen Phasen jeweils zumindest eine Sicherung (6) angeordnet ist.

11. Anlage nach mindestens einem der vorangegangenen Ansprüche,
**dadurch gekennzeichnet, dass**
eingangsseitig, also auf der dem Filter (2) zugewandten Seite einer jeweiligen Zusatzfilteranordnung eines jeweiligen Umrichters, in jeder Netzphase jeweils zumindest eine Sicherung (6) angeordnet ist.

12. Anlage nach mindestens einem der vorangegangenen Ansprüche,
**dadurch gekennzeichnet, dass**
jeder Antrieb als Direktantrieb ausgeführt ist,
**wobei** also **jeder Antrieb** einen netzseitigen **Wechselrichter,** insbesondere mit der Zusatzkapazitätsanordnung verbundenen **Wechselrichter, einen Elektromotor (4) und einen motorseitigen Wechselrichter aufweist,**
wobei der Gleichspannungsanschluss des netzseitigen Wechselrichters mit dem Gleichspannungsanschluss des motorseitigen Wechselrichters verbunden ist,
wobei der Motor am Wechselspannungsanschluss des motorseitigen Wechselrichters angeschlossen ist,
wobei die Zusatzkapazitätsanordnung am Wechselspannungsanschluss des netzseitigen Wechselrichters angeschlossen ist.

13. Anlage **nach einem der Ansprüche 2 bis 12,**
**dadurch gekennzeichnet, dass**
die Summe der beiden Kapazitätswerte **der Filterkapazität** C_{F} und **der Zusatzkapazität** Cs derart bemessen ist, dass ein aus dieser **Summe** sowie **ein**er Netzinduktivität L_{N} und **einer** Filterinduktivität L_{F} gebildete Tiefpass pulsfrequente Leistungsanteile des Umrichters, insbesondere des motorseitigen Wechselrichters, hinreichend dämpft und somit vom Netz (1) fernhält.

## Claims

1. A system, having a network (1), in particular therefore an electrical supply network, a filter (2), in particular a single filter (2), and a plurality of drives,
wherein the filter (2) is connected on one side, in particular an input side, to the network (1) and on the other side, in particular an output side, to the drives by means of an electrical line, wherein each drive has an additional capacitor arrangement, connected to the electrical line, which is arranged at the AC voltage connection of an inverter whose DC voltage connection is connected to the DC voltage connection of a motor-side inverter whose AC voltage output feeds an electric motor (4),
such that the two respective inverters arranged between the respective additional capacitor arrangement and the respective motor function as a respective direct converter (3),
wherein the respective additional capacitor arrangements are connected in parallel at the filter side.

2. A system according to claim 1,
**characterised in that**
in each of the network phases, the filter (2) has in each case a filter inductance L_{F},
wherein a filter capacitor C_{F} is in each case arranged between two respective network phases.

3. A system according to claim 1,
**characterised in that**
in each of the network phases, the filter (2) has in each case a filter inductance L_{F},
wherein between a star point and each of the network phases there is in each case arranged a filter capacitor C_{F}.

4. A system according to at least one of the preceding claims,
**characterised in that**
all respective additional capacitor arrangements are fed jointly from the filter (2).

5. A system according to at least one of the preceding claims,
**characterised in that**
- the additional capacitor arrangement has in each case an additional capacitor C_{S} between two respective network phases
or **in that**
- the additional capacitor arrangement has in each case an additional capacitor C_{S} between a star point and each of the network phases.

6. A system according to claim 5,
**characterised in that**
the additional capacitor C_{S} is between three-times and nine-times smaller than the filter capacitor C_{F}.

7. A system according to at least one of the preceding claims,
**characterised in that**
in each network phase, the line inductance between additional capacitor arrangement and respective electrically connected semiconductor switch of the network-side inverter is lower than the line inductance between additional capacitor arrangement and filter (2).

8. A system according to at least one of the preceding claims,
**characterised in that**
at least one of the drives drives a flywheel nass (5), in particular so that this drive is in the form of a flywheel energy storage.

9. A system according to any one of claims 5 to 8,
**characterised in that**
the distance of the additional capacitors C_{S} from the inverter, in particular from the semiconductor switches of the network-side inverter of the converter, is smaller than the distance from the filter capacitors C_{F} and/or from the filter inductors L_{F}.

10. A system according to at least one of the preceding claims,
**characterised in that**
fuses are provided at the output side, remote from the network (1), of the filter (2),
in particular wherein at least one respective fuse (6) is associated with each of the output-side phases, in particular wherein at least one respective fuse (6) is arranged in each of the output-side phases.

11. A system according to at least one of the preceding claims,
**characterised in that**
at the input side, therefore at the side, facing the filter (2,) of a respective additional filter arrangement of a respective converter, at least one respective fuse (6) is arranged in each network phase.

12. A system according to at least one of the preceding claims,
**characterised in that**
each drive is in the form of a direct drive,
wherein therefore each drive has a network-side inverter, in particular an inverter connected to the additional capacitor arrangement, an electric motor (4) and a motor-side inverter, wherein the DC voltage connection of the network-side inverter is connected to the DC voltage connection of the motor-side inverter,
wherein the motor is attached to the AC voltage connection of the motor-side inverter, wherein the additional capacitor arrangement is attached to the AC voltage connection of the network-side inverter.

13. A system according to any one of claims 2 to 12,
**characterised in that**
the sum of the two capacitance values of the filter capacitor C_{F} and the additional capacitor C_{S} is calculated in such a manner that a low-pass filter formed from this sum as well as a network inductor L_{N} and a filter inductor L_{F} sufficiently attenuates pulse-frequency portions of the power of the converter, in particular of the motor-side inverter, and consequently keeps it away from the network (1).

## Revendications

1. Installation comprenant un réseau (1), à savoir, en particulier un réseau d'alimentation électrique, un filtre (2) notamment unique, et plusieurs entraînements,
le filtre (2) étant raccordé d'une part au réseau (1), notamment côté entrée, et d'autre part aux entraînements, notamment côté sortie, à l'aide d'au moins un conducteur électrique, chaque entraînement étant muni d'un ensemble de condensateurs additionnels, raccordé audit conducteur électrique et implanté au niveau de la connexion de tension alternative d'un onduleur dont la connexion de tension continue est raccordée à la connexion de tension continue d'un onduleur situé côté moteur, dont la sortie de tension alternative alimente un moteur électrique (4),
de telle sorte que les deux onduleurs considérés, interposés entre l'ensemble respectif de condensateurs additionnels et le moteur respectif, remplissent la fonction d'un cycloconvertisseur (3) respectif,
sachant que les ensembles respectifs de condensateurs additionnels sont branchés en parallèle côté filtre.

2. Installation selon la revendication 1,
**caractérisée par le fait que**
le filtre (2) comporte, à chaque fois, une inductance de filtrage L_{F} dans chacune des phases du réseau,
un condensateur de filtrage C_{F} étant interposé, à chaque fois, entre deux phases respectives au sein desdites phases du réseau.

3. Installation selon la revendication 1,
**caractérisée par le fait que**
le filtre (2) comporte, à chaque fois, une inductance de filtrage L_{F} dans chacune des phases du réseau,
un condensateur de filtrage C_{F} étant interposé, à chaque fois, entre un point neutre et chacune desdites phases du réseau.

4. Installation selon au moins l'une des revendications précédentes, **caractérisée par le fait que**
tous les ensembles de condensateurs additionnels considérés sont alimentés en commun à partir du filtre (2).

5. Installation selon au moins l'une des revendications précédentes, **caractérisée par le fait que**
- l'ensemble de condensateurs additionnels est pourvu, à chaque fois, d'un condensateur additionnel Cs entre deux phases respectives au sein des phases du réseau ;
ou **par le fait que**
- ledit ensemble de condensateurs additionnels est pourvu, à chaque fois, d'un condensateur additionnel Cs entre un point neutre et chacune desdites phases du réseau.

6. Installation selon la revendication 5,
**caractérisée par le fait que**
le condensateur additionnel Cs est entre trois fois et neuf fois plus petit que le condensateur de filtrage C_{F}.

7. Installation selon au moins l'une des revendications précédentes, **caractérisée par le fait que**,
dans chaque phase du réseau, l'inductance de ligne entre l'ensemble de condensateurs additionnels et un commutateur respectif à semi-conducteur, raccordé électriquement, de l'onduleur situé côté réseau, est inférieure à l'inductance de ligne entre ledit ensemble de condensateurs additionnels et le filtre (2).

8. Installation selon au moins l'une des revendications précédentes, **caractérisée par le fait**
**qu'**au moins l'un des entraînements entraîne un volant d'inertie (5), de sorte que cet entraînement est notamment réalisé en tant qu'accumulateur à volant d'inertie.

9. Installation selon l'une des revendications 5 à 8,
**caractérisée par le fait que**
l'éloignement des condensateurs additionnels Cs vis-à-vis du convertisseur, notamment vis-à-vis des commutateurs à semi-conducteurs de l'onduleur dudit convertisseur, situé côté réseau, est moindre que l'éloignement vis-à-vis des condensateurs de filtrage C_{F} et/ou vis-à-vis des inductances de filtrage L_{F}.

10. Installation selon au moins l'une des revendications précédentes, **caractérisée par le fait que**
des fusibles sont prévus du côté sortie du filtre (2) tourné à l'opposé du réseau (1),
au moins un fusible (6) étant respectivement associé à chacune des phases du côté sortie, sachant notamment qu'au moins un fusible (6) est respectivement implanté dans chacune desdites phases du côté sortie.

11. Installation selon au moins l'une des revendications précédentes, **caractérisée par le fait**
**qu'**un moins un fusible (6) est respectivement implanté dans chaque phase du réseau côté entrée, c'est-à-dire du côté, tourné vers le filtre (2), d'un ensemble de condensateurs additionnels considéré d'un convertisseur respectif.

12. Installation selon au moins l'une des revendications précédentes,
**caractérisée par le fait que**
chaque entraînement est réalisé sous la forme d'un entraînement direct, sachant, par conséquent, que chaque entraînement comprend un onduleur situé côté réseau, notamment un onduleur raccordé à l'ensemble de condensateurs additionnels, un moteur électrique (4) et un onduleur situé côté moteur,
la connexion de tension continue dudit onduleur situé côté réseau étant raccordée à la connexion de tension continue dudit onduleur situé côté moteur,
lequel moteur est raccordé à la connexion de tension alternative dudit onduleur situé côté moteur,
ledit ensemble de condensateurs additionnels étant raccordé à la connexion de tension alternative dudit onduleur situé côté réseau.

13. Installation selon l'une des revendications 2 à 12,
**caractérisée par le fait que**
la somme des deux valeurs capacitives du condensateur de filtrage C_{F} et du condensateur additionnel Cs est calculée de façon telle qu'un filtre passe-bas constitué sur la base de cette somme, ainsi que d'une inductance de réseau L_{N} et d'une inductance de filtrage L_{F}, amortisse suffisamment des composants de puissance à fréquence d'impulsions du convertisseur, en particulier de l'onduleur situé côté moteur, et les maintienne ainsi à distance dudit réseau (1).
